# EUROPÄISCHE PATENTSCHRIFT

(11) **EP 0 910 945 B1**
(45) Veröffentlichungstag und Bekanntmachung des Hinweises auf die Patenterteilung: **02.04.2003**
(21) Anmeldenummer: 98119371.7
(22) Anmeldetag: 14.10.1998
(51) Int. Cl.: A01K 63/06, A01K 63/00

(54) **Aquariumabdeckung**
Aquarium cover
Lit pour aquarium

(30) Priorität: 22.10.1997 DE 19746527; 19.03.1998 DE 29804946 U
(43) Veröffentlichungstag der Anmeldung: 28.04.1999
(73) Patentinhaber: Ksienzyk, Horst, 40699 Erkrath (DE)
(72) Erfinder: Ksienzyk, Horst, 40699 Erkrath (DE)
(74) Vertreter: Christophersen, Ruth

(56) Entgegenhaltungen:
- DE-A- 3 409 336
- DE-U- 8 912 939
- DE-U- 9 006 485
- US-A- 3 841 267

## Beschreibung

Die vorliegende Erfindung betrifft eine Aquariumabdeckung, bestehend aus einem auf die Öffnung des Aquariumgefäßes aufgesetzten Rahmen sowie mindestens zwei sich auf dem Rahmen abstützenden Abdeckplatten, die über ein gemeinsames Gelenk miteinander verbunden und zum Freilegen eines Teils der Öffnung des Aquariumgefäßes entlang des Gelenks zueinander anwinkelbar sind.

Aquariumgefäße werden in der Regel mit geeigneten Abdeckungen abgedeckt, um die darin lebenden Fische und Pflanzen, sowie deren Lebensraum, das Wasser, zu schützen. Es sind verschiedene Aquarienabdeckungen bekannt. Die einfachste Art besteht lediglich aus einer einfachen Platte, deren Handbarkeit allerdings nachteilig ist, da zum Füttern der Fische und Reinigen des Aquariums die Abdeckung vollständig von der Öffnung des Aquariumgefäßes entfernt werden muß und dabei auch Platz in unmittelbarer Nähe des Aquariumgefäßes vorhanden sein muß, um die Abdeckung absetzen zu können. Eine andere Aquariumabdeckung wird in der deutschen Patentschrift 34 09 336 offenbart. Diese Abdeckung besteht aus einer nach unten lichtabstrahlenden, eine Deckplatte aufweisenden und Beleuchtungskörper tragenden Beleuchtungseinheit sowie zwei schwenkbar angeordneten, herunterklappbaren Abdeckplatten, wobei die Beleuchtungseinheit mit wenigstens einer sich in hochgeklappter Lage befindlichen Abdeckplatte in Richtung auf die Längsseite des Aquariumgefäßes verschiebbar ist und zwei stimseitige Endstücke aufweist. Die Aquariumabdeckung weist einen auf das Aquariumgefäß aufsetzbaren rechteckigen Rahmen auf, der eine oben umlaufende innenliegende Vertiefung hat. Die Deckplatte weist zwei längs verlaufende Nuten auf und die wasserdichte Beleuchtungseinheit besteht aus einem Profil und liegt mit zwei an den Endstücken vorgesehenen an die Vertiefungen angepaßten Vorsprüngen in der innenliegenden Vertiefung der kürzeren Seiten des Rahmens auf. Die Abdeckplatten sind an je einer Längsseite der Beleuchtungseinheit in Ausschnitten der entsprechenden Endstücke bzw. in den längs verlaufenden Nuten der Deckplatte herausnehmbar angeordnet, wobei sie in herunter geklapptem Zustand in der Vertiefung aufliegen und mit dem oberen Rand des Rahmens fluchten. Ferner weisen die Abdeckplatten an beiden Enden einer ihrer Längsseiten je einen Gelenkzapfen auf, der beim Einsetzen der Abdeckplatten in die längs verlaufende Nut durch den Ausschnitt einführbar ist und dessen Dicke gleich der Weite der Nut ist, wobei die Gelenkzapfen und ihre Lagerung so ausgebildet sind, daß im heruntergeklappten Zustand der Abdeckplatten die Gelenkzapfen aus der Lagerung nicht heraushebbar sind. Jede der Abdeckplatten ist über die vertikale hinaus bis in eine Richtung zur anderen Abdeckplatte geneigte Lage hochklappbar, in der sie sich an den Wänden der längs verlaufenden Nuten bzw. der Deckplatte abstützt. Die Beleuchtungseinheit ist in der Vertiefung des Rahmens verschiebbar.

Die in der voranstehend genannten Patentschrift offenbarte Aquariumabdeckung weist eine Vielzahl von Nachteilen auf. So kann die Beleuchtungseinheit der Abdeckung, die wesentliche tragende Funktion für die Deckplatten hat, zu Wartungsarbeiten an den Beleuchtungskörper, wie z.B. das Wechseln der Leuchtmittel, nicht bedienungsfreundlich und sicher geklappt werden. Die Abdeckplatten bestehen in der Regel aus Vollmaterial und dienen aufgrund ihrer geringen Stabilität nur dazu, Licht und Luftfeuchtigkeit zurückzuhalten. Diese Funktion kann durch die thermische Belastung des Materials, hervorgerufen durch die wärmeabstrahlende Beleuchtung und ein entsprechend temperiertes Aquarium sowie die dadurch zum Teil auftretenden Materialspannungen durch unterschiedliche Ausdehnungskooffizienten des Trägermaterials und der Dekorbeschichtung auf demselben, zunehmend eingeschränkt werden. Sie bedürfen einer Beleuchtungseinheit, die aus Stabilitätsgründen auf dem Rahmen aufliegen muß.

Um die Verschiebbarkeit der Beleuchtungseinheit zu gewährleisten, sind stimseitige Endstücke notwendig, die die Funktion eines Schlittens haben.

Das Integrieren zusätzlicher Beleuchtungseinheiten in die Abdeckung ist nicht vorgesehen und würde die Verschiebbarkeit so stark einschränken, daß umfassende Arbeiten im Inneren des Aquariumgefäßes nur durch Entfernen mindestens einer Beleuchtungseinheit möglich wären. Weiterhin müßten neue Abdeckplatten installiert werden, da die Abstände der Leuchtebalken zum Rahmen sich verändern würden. Das Ausmaß der Abdeckung ist durch die geringe Stabilität des Rahmenprofils stark eingeschränkt und so nicht für größere über 1,5 m lange Aquariumgefäße geeignet.

Andere Aquariumformen, wie z.B. ein dreieckiges Aquarium, werden mit einer Abdeckung versehen, in der die Leuchtbalken fest montiert sind, so daß das Verschieben des Leuchtbalkens nicht mehr möglich ist. Um hierbei die Leuchtmittel zu wechseln und Einrichtungs- und Pflegemaßnahmen im Inneren des Aquariumgefäßes im großen Umfang durchführen zu können, ist es notwendig, den Leuchtbalken vollständig aus dem Rahmen zu entfernen.

Auch bei standardmäßigen Fütter- und Wartungsarbeiten weisen die Aquarien aus dem Stand der Technik Nachteile auf. So liegt im hochgeklappten Zustand der Abdeckung die Beleuchtungseinheit frei und blendet denjenigen, der am Aquarium arbeitet.

In der DE 90 06 485 U wird ein Baugruppenträger zur Anordnung, Befestigung und Installation insbesondere von elektrischen, elektronischen und hydromechanischen Betriebs-, Steuer-, Versorgungs- und/oder Überwachungsgeräten für Aquarien und/oder Terrarien beschrieben, auf welchem diese Geräte einstückig angordnet sind bzw. die elektrischen Installationseinrichtungen steckfertig für den Anschluß der Geräte in berührungssicheren Abdeckungen auf dem Baugruppenträger vorgesehen sind. Der Baugruppenträger ist in einer Abdeckhaube angeordnet, die einen Durchbruch aufweist. Der Durchbruch kann mit einem Deckel verschlossen werden, welcher beispielsweise als Klappdeckel ausgestaltet sein kann. Die einzelnen Platten des Klappdeckels sind über ein Scharnier nicht lösbar miteinander verbunden. Der beschriebene Klappdeckel verdeckt und schützt die Baugruppe, ermöglicht selbst in geöffneter Stellung nicht das Arbeiten im Innern des Aquariumgefäßes.

Demgemäß ist es Aufgabe der vorliegenden Erfindung, eine Aquariumabdeckung zu schaffen, die einen einfachen und stabilen Aufbau hat, und die sicher und bedienungsfreundlich sämtliche Wartungsarbeiten an der Abdeckung oder im Inneren eines Aquariumgefäßes beliebiger Länge und einer Tiefe von bis zum 1,5 m ermöglicht. Ferner sollte es möglich sein, das Aquariumgefäß mit zusätzlichen Beleuchtungskörpern auszustatten und die Abdeckung ohne weiteres nachträglich auf andere Aquariumformen aufzusetzen.

Gegenstand der vorliegenden Erfindung ist demgemäß eine Aquariumabdeckung der eingangs genannten Art, die dadurch gekennzeichnet ist, daß die Abdeckplatten mit ihrem zum Aquariumgefäß hinweisenden Unterseiten zueinander anwinkelbar ausgebildet sind, wobei an beiden Abdeckplatten im Querschnitt hakenförmig zueinander greifende Profile als gemeinsames Gelenk angeordnete sind und daß die Abdeckplatten in ihrer angewinkelten Stellung ausschließlich im Bereich ihrer parallel zu dem Gelenk verlaufenden Außenränder auf den Rahmen abstützen.

Der Vorteil der erfindungsgemäßen Abdeckung besteht im Wesentlichen darin, daß sie einen im Gegensatz zum Stand der Technik einfacheren und stabileren Aufbau aufweist, und daß ihre Handhabung bedienungsfreundlicher und sicherer ist. Eine Erweiterung mit zusätzlichen Beleuchtungseinheiten wird ermöglicht, und die Abdeckung kann für Aquariumgefäße in allen Formen, wie Dreieck, Vieleck oder runde Formen (Kreis, Oval) und beliebiger Länge und einer Tiefe von bis zu 1,5 m hergestellt werden. Im folgenden wird die Erfindung unter Bezugnahme auf die beigefügten Zeichnungen beschrieben. Es zeigen
- Fig.1: die Aquariumabdeckung in Gebrauchsstellung,
- Fig. 2: Anordnung einer Beleuchtungseinheit im Aufnahmeprofil.
- Fig. 3: das Rahmenprofil im Querschnitt,
- Fig. 4: das Mittelprofil im Querschnitt,

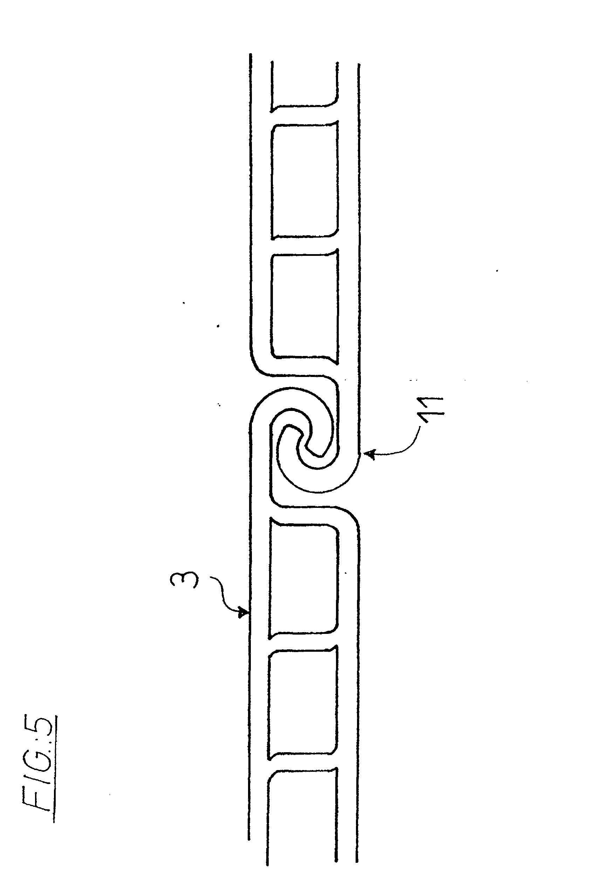

- Fig. 5: die Abdeckplatte mit dem abgerundeten Hakenprofil,

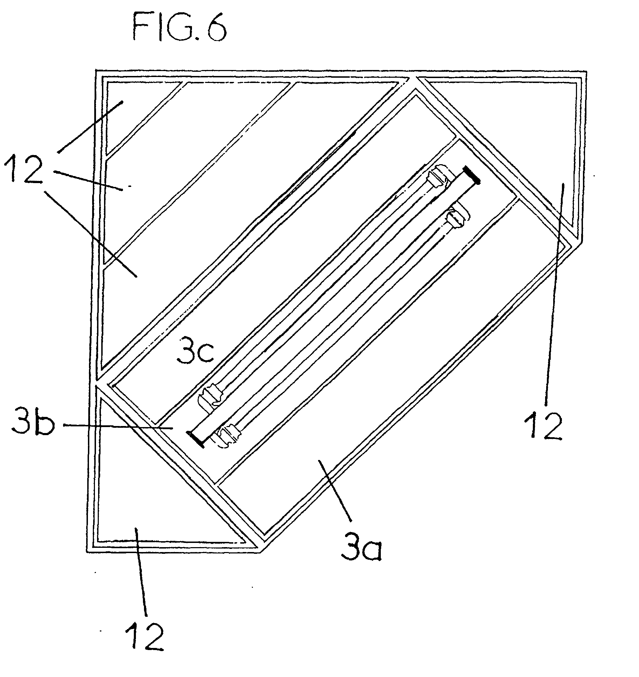

- Fig. 6: die Möglichkeit mit der erfindungsgemäßen Abdeckung ein dreieckiges Aquarium abzudecken.

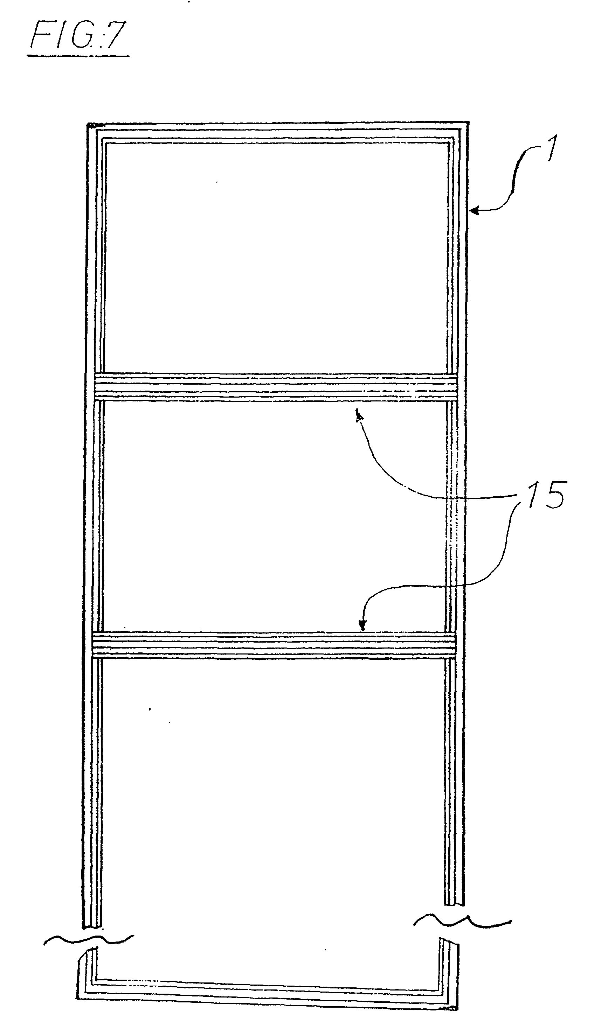

- Fig. 7: die Rahmenverlängerung mit Mittelprofilen,
- Fig. 8: eine Seitenansicht der Abdeckung und
- Fig. 9 und 10: eine Seitenansicht der Abdeckung in angewinkeltem Zustand der Abdeckplatten.
- Fig. 11: eine Seitenansicht der Abdeckung in aufgeklapptem Zustand einer Abdeckplatte.

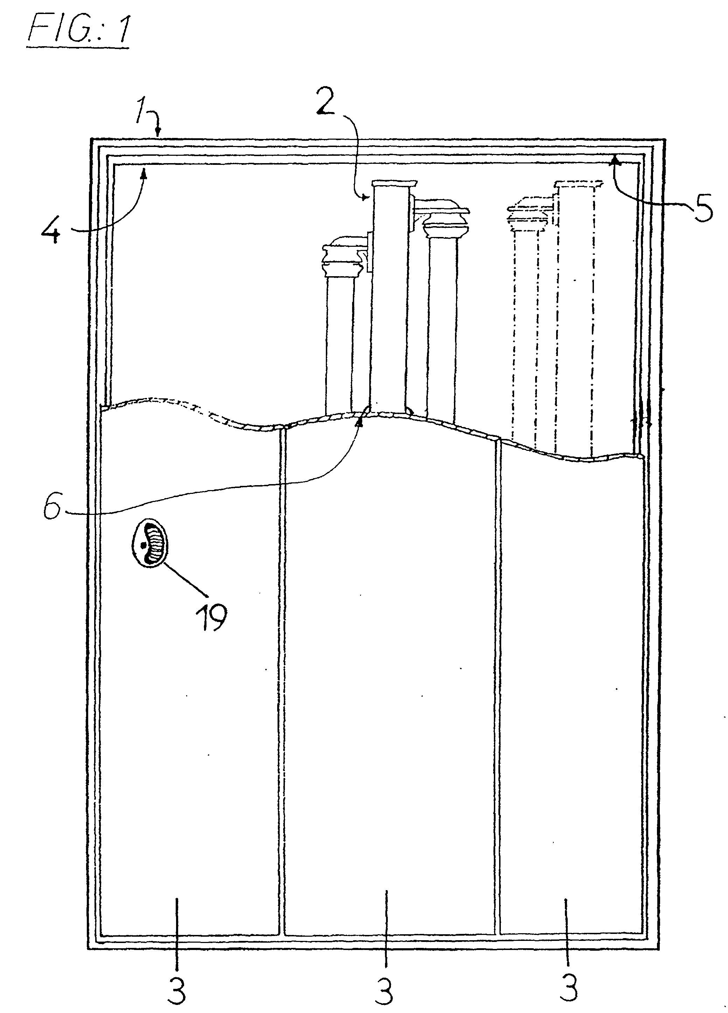

Die in Figur 1 dargestellte Aquariumabdeckung wird in Gebrauchsstellung auf ein offenes, in dieser Figur nicht gezeigtes, Aquariumbecken 16 aufgesetzt. Die Abdeckung besteht im Wesentlichen aus einem aus Kunststoff gefertigten Rahmen 1, aus einer wasserdichten Beleuchtungseinheit 2 sowie mehreren Abdeckplatten 3, die in der Regel aus Kunststoff gefertigt sind und die falls erforderlich von Mittelprofilen 15 getragen werden. Der Rahmen 1, der den Abmessungen des Aquariumgefäßes 16 angepaßt ist, ist im oberen Teil an seinen Innenwänden mit einer in das Innere des Rahmens 1 hineinragenden Abtropfleiste 4 versehen, deren Aufgabe darin besteht, daß im oberen Raum der Aquariumabdeckung kondensierte Wasser am unteren Teil des Rahmens vorbei zurück in das Aquariumbecken tropfen zu lassen und gleichzeitig die Stabilität zu erhöhen. Am oberen Rand des Rahmens 1 befindet sich eine innenliegende, vorzgusweise umlaufende, Rinne 5, deren Aufgabe darin besteht, die hochgeklappten Abdeckplatten dadurch zu stabilisieren, daß die auf dem Rahmen 1 verbleibenden Abdeckplatten 3 mit den U-Profilen 14 darin geführt und somit stabilisiert werden.

Befindet sich mindestens eine Abdeckplatte 3a in aufgeklapptem Zustand, so können die auf dem Rahmen 1 weiterhin aufliegenden Abdeckplatten 3b in Längsrichtung des Aquariumgefäßes verschoben werden. Die Abdeckplatten 3a, 3b weisen an ihrer Unterseite 18 ein Aufnahmeprofil 6 auf, in welchem die Beleuchtungseinheit 2 mit dem entsprechenden Gegenprofil 7 gehalten wird.

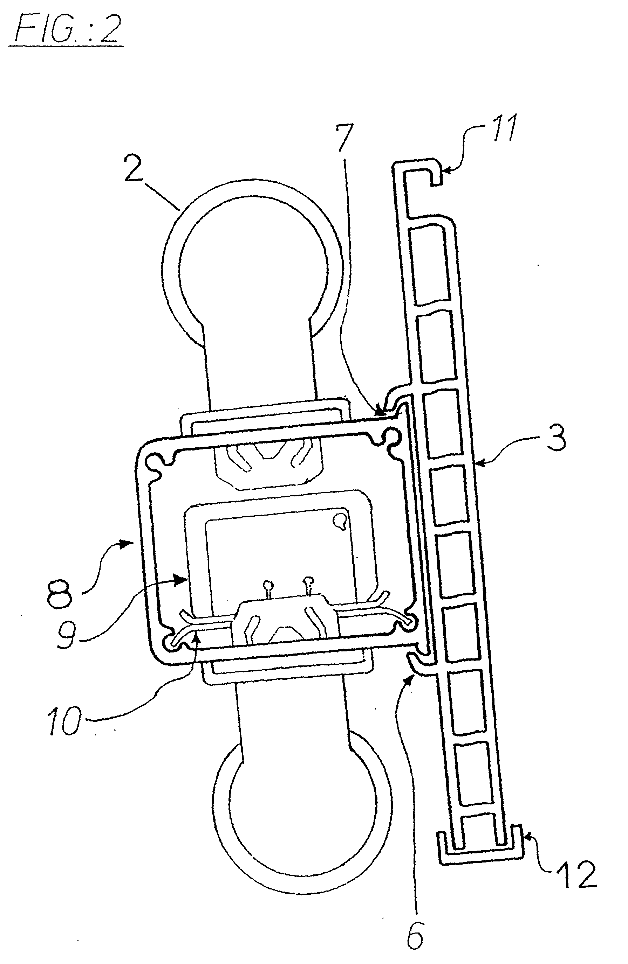

Figur 2 zeigt die Anordnung einer Beleuchtungseinheit 2 im Aufnahmeprofil 6 der Abdeckplatte 3. Die Beleuchtungseinheit 2 wird durch ein Kunststoffrechteckrohr 8, das durch seine an beiden Seiten überstehende Oberseite ein Gegenprofil bildet, welches in dem Aufnahmeprofil 6 der Deckplatte 3 lose gehalten wird, gebildet. Die Beleuchtungseinheit 2 wird durch ein senkrecht zur Deckplatte 3 unter den Drosseln 9 installiertes Profil 10 statisch verstärkt, welches gleichzeitig zur Wärmeableitung dient. Die Abdeckplatten 3 sind durch Hakenprofile 11, die je nach gewünschter Klapprichtung nach oben oder unten geöffnet werden können, gelenkartig verbunden und an den offenen Enden durch U-Profile 14 verschlossen.

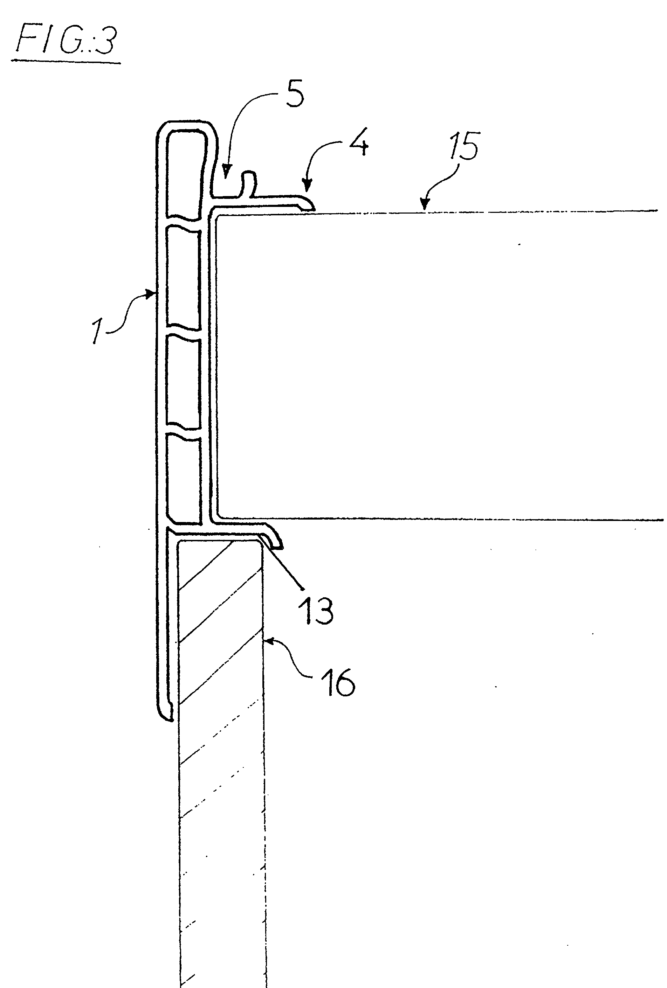

Figur 3 zeigt das Rahmenprofil 1 im Querschnitt. An der Innenseite des Rahmenprofils befinden sich die Abtropfkante 4 und die Rinne 5. Der Rahmen 1 weist an seiner unteren Hälfte eine rundum laufende, von unten offene Rille auf. Mittels dieser Rille 13 wird der Rahmen von oben auf das Aquariumgefäß 16 aufgesetzt, so daß ihre Weite mindestens der Dicke des Glases entspricht, aus dem das Aquariumgefäß 16 gefertigt ist.

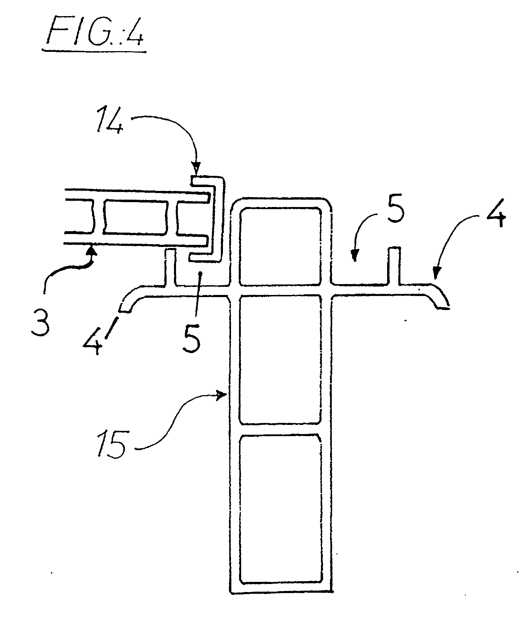

Figur 4 zeigt das Mittelprofil 15 im Querschnitt mit den beidseitig angeordneten oben liegenden Abtropfkanten 4 und Rinnen 5, in denen die Abdeckplatten 3 mit den U-Profilen 14 verschoben werden können.

Anstelle des in den Figuren 1 und 2 dargestellten Hakenprofils 11 kann auch ein beliebig anderes Profil, das sich in beide Richtungen klappen läßt, ohne die Verbindung zu lösen, eingesetzt werden, wie z. B. ein abgerundetes Hakenprofil 19.

Mit Hilfe der erfindungsgemäßen Aquariumabdeckung ist es möglich, Aquarien mit beliebigen Ausmaßen abzudecken. Beispiel hierfür sind auch mehreckige Aquarien, wie dreieckige Aquarien oder Aquarien, die in Ecken eingebaut werden. Dazu wird die erfindungsgemäße Abdeckung um weitere, an die spezielle Form angepaßten Abdeckplatten 12 ergänzt. Um die Stabilität der Abdeckung bei Aquarien mit großen Öffnungen zu gewährleisten, können Mittelprofile 15 in das Rahmenprofil 1 eingebaut werden.

In geschlossenem Zustand liegen die Abdeckplatten 3 mit ihren Außenkanten auf dem Rahmen 1 der Abdeckung auf. Durch die besondere Konstruktion des Gelenks 11 können die Abdeckplatten entlang des Gelenks 11 derart zueinander angewinkelt werden, daß eine Abdeckplatte 3a nach oben aufgeklappt wird oder daß die Unterseiten 18 zueinander angewinkelt sind.

Das Aufklappen der Abdeckplatte 3a ist insbesondere dann von Vorteil, wenn das Aquarium nur kurzzeitig geöffnet werden soll.

Bei langwierigen Arbeiten am und im Aquarium bietet sich die zweite Möglichkeit an. Um die geöffnete Abdeckung stabil im geöffneten Zustand zu halten, wird die erste Abdeckplatte 3a in der als Rastmittel 17 dienenden Auskerbung im Rahmen 1 eingerastet. Durch diese Stellung wird gleichzeitig die Beleuchtungseinheit 2 abgedeckt, d.h. es kann blendfrei gearbeitet werden.

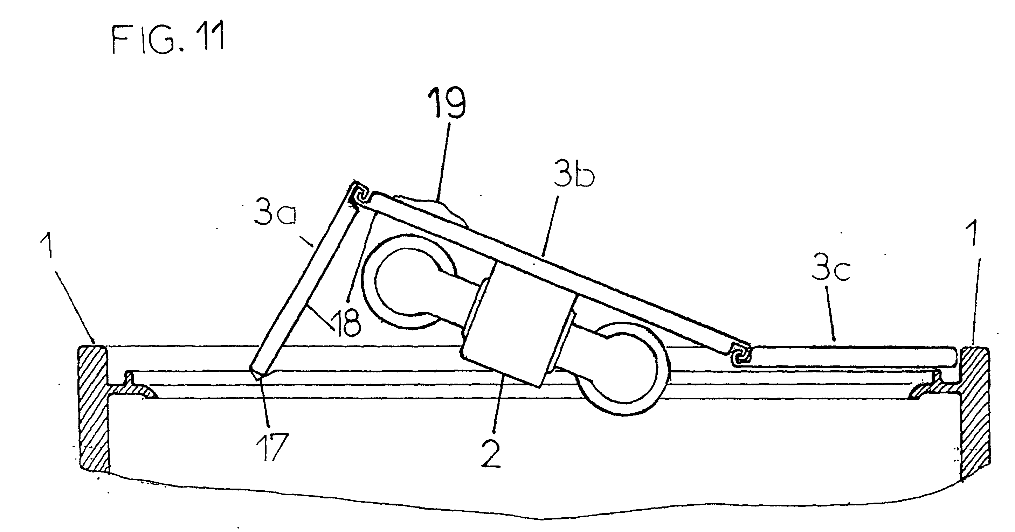

Die Beleuchtungseinheit 2 kann unter jeder der Abdeckplatten 3 angebracht werden. In der in Figur 11 dargestellten Ausführungsform weist die Abdeckung drei Abdeckplatten 3 auf, wobei sich die Beleuchtungseinheit 2 unter der mittleren Abdeckplatte 3 befindet.

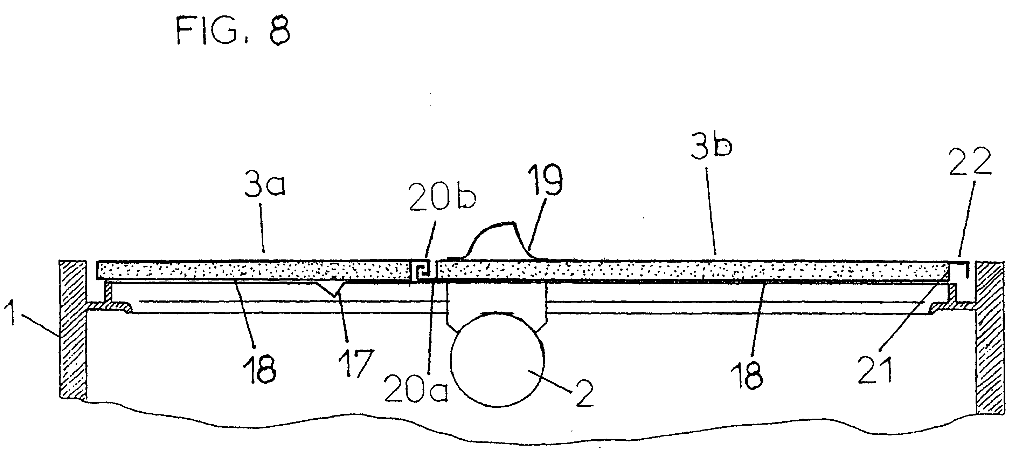

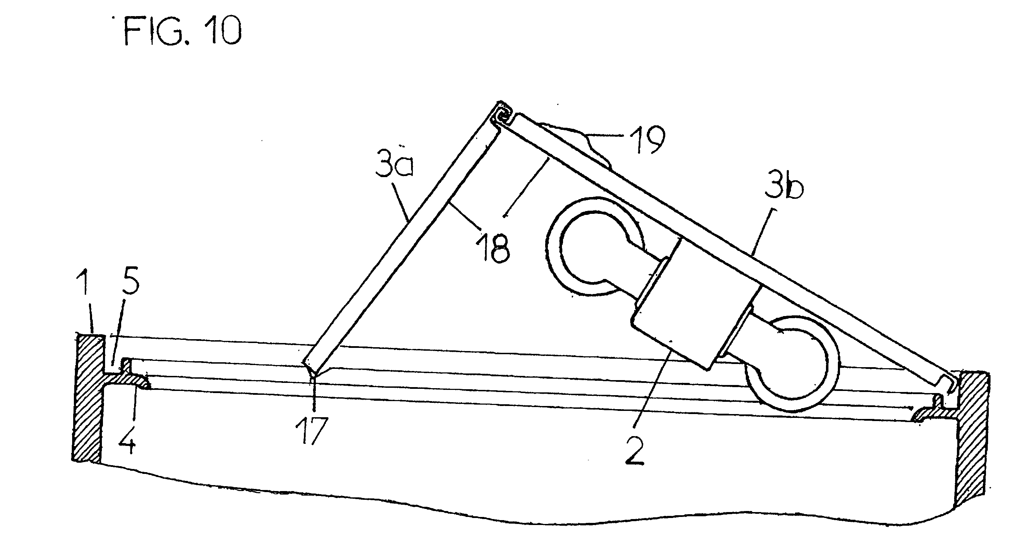

In den in den Figuren 8 bis 10 dargestellten Auführungsformen ist eine der beiden Abdeckplatten 3a, 3b mit einem Griff 19 versehen.

Bei der in Fig. 8 dargestellten Ausführungsform ist bei der mit dem Griff 19 versehenen Abdeckplatte das ist das daran befestigte hakenförmige Profil 20a nach oben offen gestaltet, während das an der anderen Abdeckplatte befestigte hakenförmige Profil 20a nach unten offen gestaltet ist. Die mit dem nach oben offenen hakenförmigen Profil 20a versehene Abdeckplatte (3b) ist in dieser Ausführungsform an ihrer zum Aquariumgefäß 16 hin weisenden Unterseite 18 mit einer Beleuchtungseinheit 2 versehen.

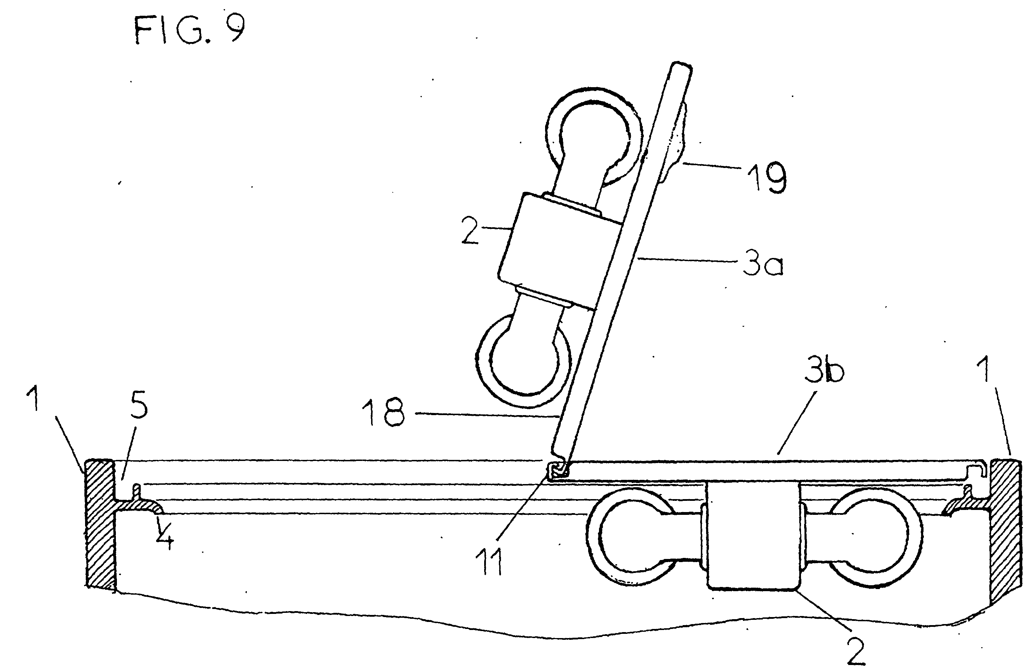

Bei der in Fig. 9 dargestellten Ausführungsform ist bei der mit dem Griff 19 versehenen Abdeckplatte das daran befestigte hakenförmige Profil 20b nach unten offen gestaltet ist, während das an der anderen Abdeckplatte befestigte hakenförmige Profil 20a nach oben offen gestaltet ist.

In dieser Ausgestaltung ist die mit dem nach oben offenen hakenförmigen Profil 20a versehene Abdeckplatte 3b an ihrem Außenrand 21 mit einem nach unten ragenden Vorsprung 22 versehen, der sich außerhalb eines nach oben ragenden, an dem Rahmen angeformten Steges 5 befindet.

### Bezugszeichenliste

- 1: Rahmenprofil
- 2: Beleuchtungseinheit
- 3: Abdeckplatten
- 4: Abtropfleiste
- 5: Rinne
- 6: Aufhahmeprofil
- 7: Gegenprofil
- 8: Kunststoffrechteckrohr
- 9: Drosseln
- 10: Metallprofil
- 11: Hakenprofil
- 12: weitere Abdeckplatten
- 13: Rille
- 14: U-Profil
- 15: Mittelprofil
- 16: Aquariumgefäß
- 17: Rastmittel
- 18: Unterseite der Abdeckplatten 3
- 19: Griff
- 20a: nach unten offenes Profil
- 20b: nach oben offenes Profil
- 21: Außenrand der Abdeckplatte 3
- 22: unten ragender Vorsprung

## Patentansprüche

1. Aquariumabdeckung bestehend aus einem auf die Öffnung des Aquariumgefäßes (16) aufgesetzten Rahmen (1) sowie mindestens zwei sich auf den Rahmen stützenden Abdeckplatten (3a, 3b), die über ein gemeinsames Gelenk (11) miteinander verbunden und zum Freilegen eines Teils der Öffnung des Aquariumgefäßes entlang des Gelenks zueinander anwinkelbar sind, **dadurch gekennzeichnet, daß**
die Abdeckplatten (3a, 3b) mit ihrem zum Aquariumgefäß (16) hinweisenden Unterseiten (18) zueinander anwinkelbar ausgebildet sind, wobei an beiden Abdeckplatten (3a, 3b) im Querschnitt hakenförmig zueinander greifende Profile als gemeinsames Gelenk (11) angeordnete sind und daß
die Abdeckplatten (3a, 3b) in ihrer angewinkelten Stellung ausschließlich im Bereich ihrer parallel zu dem Gelenk (11) verlaufenden Außenränder auf den Rahmen (1) abstützen.

2. Aquariumabdeckung nach Anspruch 1, **dadurch gekennzeichnet, daß** der Rahmen mit Rastmitteln (17) für den Außenrand der einen der Abdeckplatten (3a, 3b) versehen ist, und daß die Rastmittel (17) bei geschlossener Abdeckung von dieser Abdeckplatte bedeckt sind.

3. Aquariumabdeckung nach Anspruch 2, **gekennzeichnet durch** Kerben in dem Rahmen als Rastmittel (17).

4. Aquariumabdeckung nach einem der Ansprüche 1 bis 3, **dadurch gekennzeichnet, daß** eine der beiden Abdeckplatten (3a,3b) mit einem Griff (19) versehen ist.

5. Aquariumabdeckung nach Anspruch 1, **dadurch gekennzeichnet, daß** bei der mit dem Griff (19) versehenen Abdeckplatte das daran befestigte hakenförmige Profil (20b) nach unten offen gestaltet ist, während das an der anderen Abdeckplatte befestigte hakenförmige Profil (20a) nach oben offen gestaltet ist.

6. Aquariumabdeckung nach Anspruch 5, **dadurch gekennzeichnet, daß** bei der mit dem Griff (19) versehenen Abdeckplatte das daran befestigte hakenförmige Profil (20a) nach oben offen gestaltet ist, während das an der anderen Abdeckplatte befestigte hakenförmige Profil (20a) nach unten offen gestaltet ist.

7. Aquariumabdeckung nach Anspruch 6, **dadurch gekennzeichnet, daß** die mit dem nach oben offenen hakenförmigen Profil (20a) versehene Abdeckplatte (3b) an ihrem Außenrand (21) mit einem nach unten ragenden Vorsprung (22) versehen ist, der sich außerhalb eines nach oben ragenden, an dem Rahmen angeformten Steges (5) befindet.

8. Aquariumabdeckung nach einem der Ansprüche 1 bis 7, **dadurch gekennzeichnet, daß** an dem Rahmen (1) umlaufend ein nach oben ragender Steg angeformt ist, und daß der Steg die innere Begrenzung einer vorzugsweise umlaufenden Rinne (5) bildet.

9. Aquariumabdeckung nach Anspruch 8, **dadurch gekennzeichnet, daß** der Rahmen entlang seines Inneren Randes mit einer nach unten abgebogenen Abtropfkante (4) versehen ist.

10. Aquariumabdeckung nach einem der Ansprüche 1 bis 9, **dadurch gekennzeichnet, daß** die mit dem nach oben offenen hakenförmigen Profil (20a) versehene Abdeckplatte (3b) an ihrer zum Aquariumgefäß (16) hin weisenden Unterseite (18) mit einer Beleuchtungseinheit (2) versehen ist.

## Claims

1. Aquarium covering comprising a frame (1), which is positioned on the opening of the aquarium vessel (16), and at least two covering panels (3a, 3b), which are supported on the frame, are connected to one another via a common articulation (11) and can be angled in relation to one another along the articulation in order to expose part of the opening of the aquarium vessel, **characterized in that** the covering panels (3a, 3b) are designed such that they can be angled in relation to one another by way of their undersides (18), which are oriented in the direction of the aquarium vessel (16), profiles which engage one another in a hook-like manner in cross section being arranged, as the common articulation (11), on the two covering panels (3a, 3b), and **in that**, in their angled position, the covering panels (3a, 3b) are supported on the frame (1) exclusively in the region of their outer borders running parallel to the articulation (7).

2. Aquarium covering according to Claim 1, **characterized in that** the frame is provided with latching means (17) for the outer border of one of the covering panels (3a, 3b) and **in that**, when the covering is closed, the latching means (17) are covered by said covering panel.

3. Aquarium covering according to Claim 2, **characterized by** notches in the frame as latching means (17).

4. Aquarium covering according to one of Claims 1 to 3, **characterized in that** one of the two covering panels (3a, 3b) is provided with a handle (19).

5. Aquarium covering according to Claim 1, **characterized in that**, in the case of the covering panel which is provided with the handle (19), the hook-like profile (20b) fastened thereon is configured to be open in the downward direction, while the hook-like profile (20a) fastened on the other covering panel is configured to be open in the upward direction.

6. Aquarium covering according to Claim 5, **characterized in that**, in the case of the covering panel which is provided with the handle (19), the hook-like profile (20b) fastened thereon is configured to be open in the upward direction, while the hook-like profile (20a) fastened on the other covering panel is configured to be open in the downward direction.

7. Aquarium covering according to Claim 6, **characterized in that** the covering panel (3b), which is provided with the upwardly open hook-like profile (20a), is provided, on its outer border (21), with a downwardly projecting protrusion (22), which is located outside an upwardly projecting rib (5) integrally formed on the frame.

8. Aquarium covering according to one of Claims 1 to 7, **characterized in that** an upwardly projecting rib is integrally formed all the way around the frame (1), and **in that** the rib forms the inner boundary of a preferably peripheral channel (5).

9. Aquarium covering according to Claim 8, **characterized in that** the frame is provided with a downwardly curved drip-off edge (4) along its inner border.

10. Aquarium covering according to one of Claims 1 to 9, **characterized in that** on its underside (18), which is oriented in the direction of the aquarium vessel (16), the covering panel (3b), which is provided with the upwardly open hook-like profile (20a), is provided with an illuminating unit (2).

## Revendications

1. Couvercle d'aquarium se composant d'un cadre (1) posé sur l'ouverture du récipient de l'aquarium (16) ainsi que d'au moins deux plaques de recouvrement (3a, 3b), s'appuyant sur le cadre, qui sont reliées l'une à l'autre par une articulation commune (11) et qui peuvent se plier l'une par rapport à l'autre pour dégager une partie de l'ouverture du récipient d'aquarium, **caractérisé en ce que**
les plaques de recouvrement (3a, 3b) avec leurs côtés inférieurs (18) dirigés vers le récipient d'aquarium (16), où des profilés venant en prise l'un avec l'autre avec une section en forme de crochet, sont disposés en tant qu'articulation commune (11) sur les deux plaques de recouvrement (3a, 3b) et **en ce que**,
les plaques de recouvrement (3a, 3b) dans leur position pliée, s'appuient exclusivement sur le cadre (1) dans la zone de leur bords externes se prolongeant parallèlement à l'articulation (11).

2. Couvercle d'aquarium selon la revendication 1, **caractérisé en ce que** le cadre est pourvu de moyens d'encliquetage (17) pour le bord externe d'une des plaques de recouvrement (3a, 3b), et **en ce que** les moyens d'encliquetage (17) sont recouverts par cette plaque de recouvrement dans le cas d'un couvercle fermée.

3. Couvercle d'aquarium selon la revendication 2, **caractérisé par** des encoches dans le cadre, en tant que moyens d'encliquetage (17).

4. Couvercle d'aquarium selon l'une quelconque des revendications 1 à 3, **caractérisé en ce que** l'une des deux plaques de recouvrement (3a, 3b) est munie d'une poignée (19).

5. Couvercle d'aquarium selon la revendication 1, **caractérisé en ce que** dans la plaque de recouvrement munie de la poignée (19), le profilé en forme de crochet fixé à celle-ci (20b) est formé ouvert vers le bas, tandis que le profilé (20a) en forme de crochet fixé à l'autre plaque de recouvrement est formé ouvert vers le haut.

6. Couvercle d'aquarium selon la revendication 5, **caractérisé en ce que,** dans la plaque de recouvrement munie de la poignée (19), le profilé en forme de crochet fixé à celle-ci (20a) est formé ouvert vers le haut, tandis que le profilé (20a) en forme de crochet fixé à l'autre plaque de recouvrement est formé ouvert vers le bas.

7. Couvercle d'aquarium selon la revendication 6, **caractérisé en ce que** la plaque de recouvrement (3b) munie du profilé (20a) en forme de crochet ouvert vers le haut, est munie d'une partie saillante (22) se projetant vers le bas sur son bord externe (21), laquelle se trouve en dehors d'un listel (5) façonné sur le cadre, se projetant vers le haut.

8. Couvercle d'aquarium selon une quelconque des revendications 1 à 7, **caractérisé en ce qu'**un listel se projetant vers le haut est façonné de façon périphérique sur le cadre (1), et **en ce que** le listel forme la limite intérieure d'une rainure de préférence périphérique (5).

9. Couvercle d'aquarium selon la revendication 8, **caractérisé en ce que** le cadre est muni d'un bord d'égouttage (4) replié vers le bas le long de son bord intérieur.

10. Couvercle d'aquarium selon une quelconque des revendications 1 à 9, **caractérisé en ce que** la plaque de recouvrement (3b) munie du profilé en forme de crochet (20a) ouvert vers le bas, est munie d'une unité d'éclairage (2) sur le côté inférieur (18) dirigé vers le récipient d'aquarium (16).
